# EUROPÄISCHE PATENTSCHRIFT

(11) **EP 2 634 004 B1**
(45) Veröffentlichungstag und Bekanntmachung des Hinweises auf die Patenterteilung: **04.07.2018**
(21) Anmeldenummer: 13000655.4
(22) Anmeldetag: 08.02.2013
(51) Int. Cl.: B41J 19/54, B41J 19/20, B41J 29/54, G07B 17/00, B41J 2/07, G05B 19/042

(54) **Druckergerät**
Printer device
Appareil d'impression

(30) Priorität: 02.03.2012 DE 202012002510 U
(43) Veröffentlichungstag der Anmeldung: 04.09.2013
(73) Patentinhaber: Francotyp-Postalia GmbH, 13089 Berlin (DE)
(72) Erfinder: Jauert, Joachim, 13187 Berlin (DE); Schilling, Tilmann, 10243 Berlin (DE)

(56) Entgegenhaltungen:
- EP-A2- 0 347 034
- DE-A1-102007 004 729
- US-A1- 2008 060 539
- US-A1- 2011 191 502

## Beschreibung

Die Erfindung betrifft ein Druckergerät gemäß dem Oberbegriff des Patentanspruchs 1. Das Druckergerät weist eine Tintenstrahldruckvorrichtung und eine Steuerung auf, die das Drucken steuert. Für einen Mainboard-Prozessor der Steuerung wurde eine Möglichkeit geschaffen zu erkennen, welche Gerätevariante vorliegt. Das Druckergerät kommt in Frankiermaschinen, Adressiermaschinen und anderen Postverarbeitungsgeräten zum Einsatz.

Eine Tintenstrahldruckvorrichtung ist in an sich bekannter Weise mit einem Tintenstrahldruckmodul, einer Transportvorrichtung, die ein Transportband aufweist, um ein flaches Gut in Transportrichtung zu transportieren, einer Andruckvorrichtung zum Andrücken des flachen Guts an das Transportband ausgestattet. Das Tintenstrahldruckmodul besteht aus einem Druckwagen, einer Ansteuerelektronik und mindestens einer Tintenkartusche bzw. mindestens einem Tintenstrahldruckkopf, der über dem Transportpfad während des Druckens in einer Druckposition ortsfest positioniert ist. Der Druckwagen kann vor oder nach dem Drucken quer zur Transportrichtung verfahren werden, zur Wartung oder zum Auswechseln der mindestens einen Tintenkartusche bzw. des mindestens einem Tintenstrahldruckkopfes. Das Druckergerät weist eine Sensorplatine mit Sensoren auf, um die erreichte Position während der Querbewegung eines Druckwagens zu erfassen.

Aus dem europäischen Patent EP 1300 807 B1 ist ein Verfahren und eine Anordnung zum Öffnen eines Sicherheitsgehäuses bekannt, das in einer Variante eine Klappe aufweist, die jederzeit geöffnet werden kann und einen beschränkten Zugang zu einer Öffnung zum Wechseln einer Tintenkartusche gewährt. Zum Schutz vor einer Manipulation der Frankiermaschine über die Öffnung dient eine Abdeckung der Ansteuerelektronikeinheit des Druckmoduls und der Steuerleitungen der Ansteuerelektronikeinheit. Die Öffnung ist durch die Klappe verschließbar. Die Klappe ist mit einem Anschlag ausgestattet, der beim Öffnen der Klappe einen Schalter betätigt, der im Inneren des Sicherheitsgehäuses angeordnet ist. Der Schalter unterbricht die Stromversorgung eines Motors der Querbewegungsmittel des Druckmoduls, um bei einer geöffneten Klappe Unfälle aufgrund der Querbewegung des Druckmoduls zu vermeiden. Auch dann, wenn das querbewegliche Druckmodul in die Druckposition oder in eine Position außerhalb der Druckposition verfahren worden ist, bleibt die Klappe unverschlossen und kann geöffnet werden. Jedoch muss das Druckmodul in eine zwischen der Druckposition und einer der anderen Positionen gelegene Wechselposition verfahren werden, um eine dann im Bereich einer Öffnung positionierte Tintenkartusche auszuwechseln. Durch die Lage der Wechselposition zwischen der Druckposition und einer der anderen Positionen ist ein zusätzlicher Schutz der Ansteuerelektronikeinheit des Druckmoduls und der Steuerleitungen der Ansteuerelektronikeinheit nötig, der materialaufwendig ist.

Aus der deutschen Patentanmeldung DE 20 2010 015 354 A1 ist ein modular aufgebautes Druckergerät mit einer entnehmbaren kastenförmigen Baueinheit bekannt. Das Gerät ist ebenfalls mit mindestens einem Tintenstrahldruckkopf zum Drucken auf flache zu bedruckende Güter während des Durchlaufs von flachen Gütern durch das Gerät ausgestattet. Der mindestens eine Tintenstrahldruckkopf wird mittels eines Druckwagens zum Drucken in eine Druckposition verfahren. An einer Gestellwand ist mindestens ein erster Sensor angeordnet, der beim Verfahren des Druckwagens aus der Druckposition heraus einer Mikroprozessorsteuerung das Erreichen einer Dichtposition signalisiert. Der Sensor kann als Lichtschranke realisiert werden. Der Druckwagen des Druckergerätes führt dabei ebenfalls eine orthogonale Bewegung gegenüber der Transportrichtung der flachen Güter aus.

Aus der europäischen Patentanmeldung EP 2073173 A1 ist eine Vorrichtung zum Wechseln von Tintenkartuschen einer Druckvorrichtung bekannt, die eine Transportvorrichtung für flache Güter, eine Andruckvorrichtung und einen Druckmodul aufweist, wobei die Transportvorrichtung ortsfest in der Druckvorrichtung gegenüber einer Andruckvorrichtung angeordnet ist, welche das Poststück an das Transportband andrückt, welches im Transportbereich mit einer vorbestimmten Haftreibung auf einen Teil der Oberfläche der Poststückes einwirkt, welcher nicht bedruckt wird, aber nahe dem zu bedruckenden Bereich gelegen ist, wobei sich eine Wechselposition für Tintenkartuschen über dem Transportbereich einer entsprechend ausgebildeten Transportvorrichtung oder davor befindet. Die Ausrichtung der Tintenkartuschen im Druckmodul erfolgt so, das deren Bauch nach vorne, also zur Frontseite des Druckergerätes weist. Eine Patronenklappe, welche die Öffnung für das Wechseln verschließt, kann nicht geöffnet werden, wenn sich die Tintenkartuschen nicht in der Wechselposition befinden. Durch die Ausrichtung der Tintenkartuschen und die Lage der Wechselposition nahe der Frontseite des Druckergerätes, also vor allen anderen Positionen, ist kein zusätzlicher Schutz der Ansteuerelektronikeinheit des Druckmoduls und der Steuerleitungen der Ansteuerelektronikeinheit erforderlich. Das Dokument DE 102007004729 A1 offenbart ein Steuergerät bei dem an einem vorgegebenen Eingangsanschluss dessen Mikrokontrollers ein Signal erfasst und mit einem Vorgabesignal verglichen wird. Ein Steuerprogramm wird in Abhängigkeit von dem Vergleichsergebnis ausgeführt. Als Einsatzmöglichkeiten werde Fahrzeuge und stationäre industrielle Maschinen genannt. Die Herstellung eines funktionsfähigen Druckergerätes soll möglichst auch unter Verwendung von Gehäuseteilen ermöglicht werden, die einen größeren Toleranzbereich aufweisen. Ein Patronenklappendetektionsschalter ließ sich aufgrund von Toleranzen nicht sicher auslösen. Ein erster Aufbau einer Gerätevariante A musste daher mit Teilen erfolgen, die nur eine geringe Toleranz aufweisen, was die Herstellung des Druckergerätes verteuert. Ein Aufbau einer Gerätevariante B ermöglicht den Einsatz von Teilen mit einer größeren Toleranz. Bereits während der Herstellung des Druckergerätes wird eine Vielzahl von Softwarevarianten in die Speicher der Steuerung geladen. Den Gerätevarianten soll nun eine passende Software zugeordnet werden, jedoch ohne dass noch eine Änderung der Hardware der Steuerung vorgenommen werden müsste.

Der Erfindung liegt die Aufgabe zugrunde, ein Druckergerät zu entwickeln, das eine Sensorplatine mit mindestens einer Durchlichtschranke aufweist, welche einem Mainboard-Prozessor der Steuerung signalisiert, ob sich der Druckwagen in einer Position im Bereich der Durchlichtschranke befindet oder nicht. Dabei soll durch die Anpassung der Schaltungsanordnung der Sensorplatine an die Gerätevariante eine kostengünstige Möglichkeit geschaffen werden, automatisch durch den Mainboard-Prozessor der Steuerung erkennen zu können, welche der Gerätevarianten vorliegt.

Die Aufgabe wird mit den Merkmalen des Druckergerätes nach dem Patentanspruch 1 gelöst.

Das Druckergerät weist zur Unterscheidung von Gerätevarianten eine Sensorplatine mit mindestens einer Lichtschranke und mit einem Tiefpass zur Verzögerung eines von einem Ausgang einer Steuerung gelieferten Eingangssignals für die Lichtschranke auf, wobei die Verzögerung auf die jeweilige Gerätevariante abgestimmt ist, wobei die Steuerung ein FPGA aufweist, welches eine Ablaufsteuerung realisiert, um das Auftreten oder Nichtauftreten einer Verzögerung des Ausgangssignals der Lichtschranke der Sensorplatine nach einer vorbestimmten Zeitdauer ab dem Liefern des Eingangssignals für die Lichtschranke festzustellen.

Eine geänderte Schaltung einer Sensorplatine trägt zur Bestimmung der Position des Druckwagens bei. Am Druckwagen ist eine Fahne angeformt, die den Lichtstrahl einer Lichtschranke unterbricht, wenn eine entsprechende Position beim Verfahren des Druckwagens erreicht wird.

Es befindet sich mindestens eine Durchlichtschranke zur Erkennung einer der verschiedenen Druckwagen-Positionen auf der Sensorplatine. Die Position dieser Lichtschranke ist im Vergleich zu einer ersten Gerätevariante geometrisch verändert. Sie wurde beispielsweise in einer y-Richtung verschoben. Vorzugsweise ist eine neue Sensorplatine an einer Gestellwand des Druckergerätes leicht auswechselbar montiert. Auf der Sensorplatine befindet sich eine Lichtschranke nahe der Gehäuserückwand (hinten) und weiter vorne eine weitere, bei deren Auslösen die Druckposition erreicht ist. Diese weitere Lichtschranke wurde auf der Sensorplatine für die Gerätevariante B gegenüber der Sensorplatine für die Gerätevariante A um einige mm verschoben, um mehr Sicherheit für das Auslösen des Patronenklappendetektionsschalters auch bei hohen Toleranzwerten zu gewährleisten. Durch die gewählte Schaltungsanordnung der Sensorplatine bzw. durch die Anordnung eines Tiefpasses auf der Sensorplatine für die Gerätevariante B besteht nun die Möglichkeit die Erkennung der Sensorplatine für die Gerätevarianten A bzw. B automatisch durch ein FPGA oder durch einen Mainboard-Prozessor der Steuerung über eine Software zu realisieren, damit die genaue Position des Druckwagens mit dem Sensor für die Druckposition bei beiden Gerätevarianten ermittelbar ist. Zusätzlich ist es möglich, auch noch weitere Gerätevarianten festzustellen, ohne dass ein Hardware-Aufwand durch einen weiteren Sensor entsteht.

Für die Sensorplatine wurden unterschiedliche Varianten entwickelt, wobei jeder der Varianten eine bestimmte Softwareversion zugeordnet werden kann. Somit können bekannte während der Herstellung aufgetretene Mängel in der Funktion des Druckergerätes durch den Einsatz einer entsprechenden Sensorplatine und eine zugehörige Softwareversion behoben werden.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigen:
- Fig. 1,: Perspektivische Darstellung eines Details des Geräts von hinten links im Wartungsmodus, mit dem Druckwagen in der Dichtposition und mit einer Durchlichtschranke, die durch den Druckwagen betätigt wird,
- Fig. 2,: Draufsicht auf die Sensorplatine für eine Gerätevariante B,
- Fig. 3,: Schaltungsanordnung mit einer Lichtschranke, gemäß der Erfindung,
- Fig. 4,: Darstellung der zeitlichen Änderung des Pegelverlaufs für zwei unterschiedliche Gerätevarianten,
- Fig. 5,: Erläuterung der Abfrage durch die Steuerung anhand eines Flußplanes
- Fig. 6,: Prinzipschaltung für eine Sensorplatine mit zwei Lichtschranken gemäß der Erfindung.

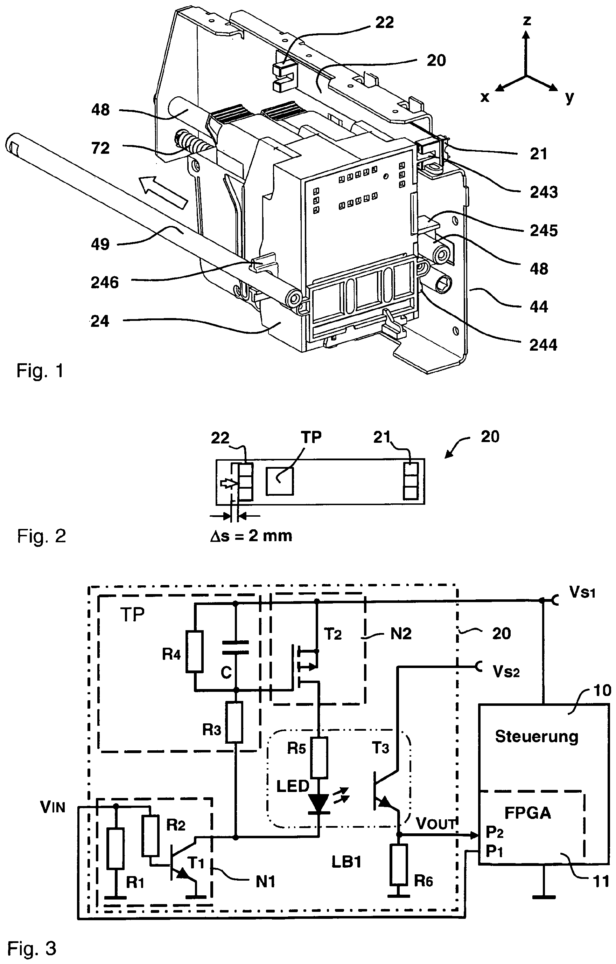

Die Figur 1 zeigt eine perspektivische Darstellung eines Details des Druckergeräts von hinten links. Im Wartungsmodus des Druckergeräts befindet sich der Druckwagen 24 in einer Dichtposition, in welcher eine erste Durchlichtschranke 21, durch den Druckwagen 24 betätigt wird. Am Druckwagen ist eine Fahne 243 angeformt, welche den Lichtstrahl der Durchlichtschranke 21 unterbricht, wenn die Dichtposition erreicht ist. Der Druckwagen 24 ist auf zwei Schienen 48 und 49 in y-Richtung und entgegengesetzt verschiebbar angeordnet. Eine Spindel 72 dient zum Antrieb des Druckwagens und ist unterhalb der Schiene 48, also entgegengesetzt zur z-Richtung angeordnet. Auf der - von hinten gesehen - rechten Seitenwand des Druckwagens 24, also auf derjenigen Seite, die der zweiten Gestellwand 44 des Chassis am nächsten liegt, sind ein nicht sichtbares Gleitlager und ein Gleitlager 245 sowie eine Spindelmutter 244 angeformt. Ein weiteres Gleitlager 246 ist auf der rechten Seitenwand gegenüberliegenden linken Seitenwand des Druckwagens 24 angeformt. Der verschiebbare Druckwagen 24 wird somit in drei Punkten gelagert. Das eine Gleitlager 246 gleitet auf der Schiene 49 und die zwei anderen Gleitlager gleiten auf der Schiene 48. Die Gleitlager sind dem Profil der Schienen angepasst. Die Schienen sind als Gleitstangen ausgebildet und weisen ein rundes, vorzugsweise ein kreisförmiges Profil auf. Der Druckwagen 24 wird in der Figur 1 in die Dichtposition verfahren dargestellt und kann in Richtung des weißen Pfeils (entgegengesetzt zur y-Richtung) in eine Druckposition und weiter in eine Kartuschenwechselposition verfahren werden. Der Druckwagen bewegt sich aus einer Dichtposition ("hinten") über die Druckposition ("vorn") bis zur Kartuschenwechselposition ("ganz vorn"), in welcher die Klappe geöffnet wird.

Die am Druckwagen angeformte Fahne 243 unterbricht den Lichtstrahl einer zweiten Durchlichtschranke 22, wenn die Druckposition erreicht ist. Beide Durchlichtschranken 21 und 22 sind auf eine Sensorplatine 20 in einem vorbestimmten Abstand angeordnet, der im Wesentlichen durch den Abstand der Dichtposition von der Druckposition y-Richtung bestimmt wird. Die Sensorplatine 20 ist leicht auswechselbar an der Gestellwand 44 montiert.

Die Figur 2 zeigt eine Draufsicht auf die Sensorplatine für eine Gerätevariante B. Die Sensorplatine 20 weist einen Tiefpass zwischen den voneinander beabstandeten Durchlichtschranken 21 und 22 auf, wobei die Durchlichtschranke 22 in Richtung der Durchlichtschranke 21 um den Weg Δs = 2 mm versetzt angeordnet ist. Durch diesen Versatz wird den erhöhten Toleranzwerten der Gerätevariante B entsprochen. Diese geometrische Änderung bedingt auch eine Softwareänderung. Mit dem Tiefpass bzw. mit einer durch den Tiefpass hervorgerufenen Signalverzögerung wird die erforderliche Softwareversion durch die Steuerung erkennbar gemacht.

Aufgrund jeder der Varianten der Schaltungsanordnung der Sensorplatine, insbesondere einer durch den Tiefpass bedingten Variante bzw. mit einer durch den Tiefpass hervorgerufenen Signalverzögerung kann eine vorbestimmte an die Gerätevariante angepasste Software durch den Mainboard-Prozessor der Steuerung ausgewählt und aufgerufen werden, um das Druckergerät zu betreiben.

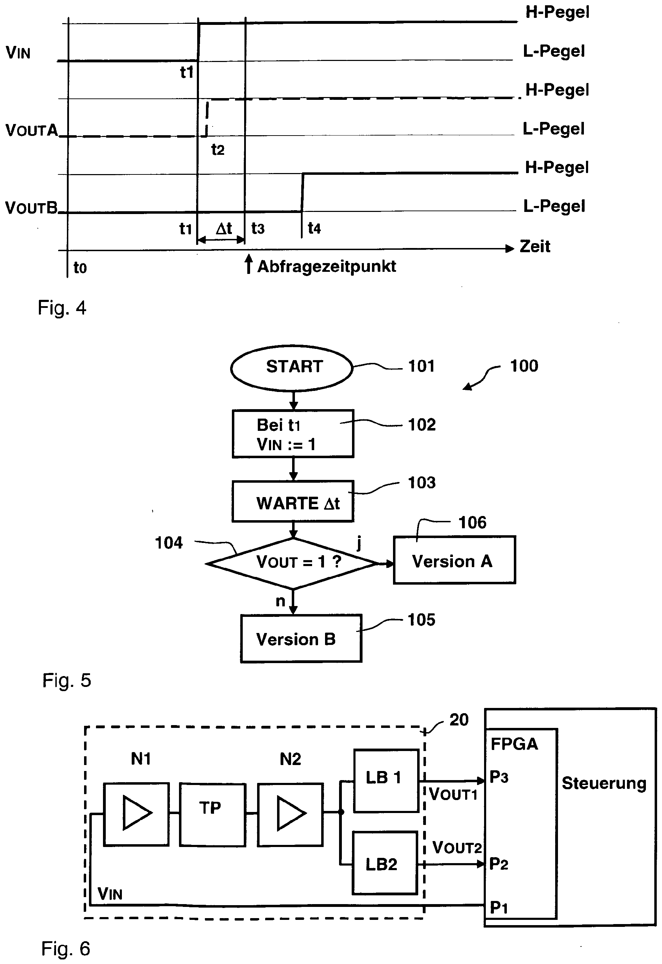

Anhand einer in der Fig. 3 dargestellten Schaltungsanordnung mit einer Lichtschranke wird deren Funktion näher erläutert. Zwei ohmsche Widerstände R1 und R2 sind in Reihe geschaltet und bilden einen Spannungsteiler, der zwischen Massepotential (L-Pegel) und einer Basis eines ersten npn-Transistors T1 geschaltet ist, dessen Emitter an Massepotential gelegt ist. Der Zusammenschaltungspunkt der Widerstände R1 und R2 bildet den Eingang der Schaltung der Sensorplatine 20. Ein Field Programmable Gate Array (FPGA) 11 liefert über einen Pin P1 das Signal VIN an den Eingang. Der Transistors T1 bildet einen ersten Negator N1 für das Signal. Dessen Ausgang liegt am Kollektor des Transistors T1 Zwischen dem Ausgang und einer ersten Versorgungsspannung Vs1 ist ein Tiefpass TP angeschlossen. Der Tiefpass TP besteht aus den zwei ohmschen Widerständen R3 und R4, die in Reihe geschaltet sind und einem Kondensator C, der eine vorbestimmte Kapazität aufweist, um das Eingangssignal am Steuereingang eines steuerbaren Schalters entsprechend zu verzögern, dessen Eingangswiderstand hochohmig ist. Der Schalter ist vorzugsweise ein Feldeffekttransistor T2 zum Beispiel vom Typ SI2333DS, der bei einem zwischen L- und H-Pegel gelegenen niedrigen Pegel eingeschaltet werden kann. Der Kondensator C ist zum Widerstand R4 parallel geschaltet und liegt mit einem Anschluss an der ersten Versorgungsspannung Vs1 = 5 V und mit dem anderen Anschluss am Zusammenschaltungspunkt der Widerstände R3 und R4 an. Am Zusammenschaltungspunkt der Widerstände R3 und R4 liegt der Gate-Anschluss des Feldeffekttransistors T2. Letzterer ist ein P-Kanal Anreicherungstyp FET. Der Source-Anschluss des Feldeffekttransistors T2 ist an die Versorgungsspannung Vs1 geschaltet. Eine Lichtschranke LB1 besteht aus einem Lichtsender und aus einem Lichtempfänger. Senderseitig findet eine am Drain-Anschluss des Feldeffekttransitors T2 über einen Widerstand R5 angeschlossene Infrarot-Leuchtdiode LED Verwendung, welche über den Eingang der Schaltungsanordnung der Sensorplatine 20 von einer Steuerung 10 angesteuert wird. Die LED wird beispielsweise bei einem L/H-Pegelwechsel des Signals VIN eingeschaltet. Alternativ kann auch gepulst werden. Empfängerseitig befindet sich ein Phototransistor T3 in Kollektor-Schaltung, dessen Kollektor mit einer zweiten Versorgungsspannung Vs2 = 3 V verbunden ist. Das Ausgangssignal VOUT je nach Zustand der Lichtschranke veränderlich ist (Fig. 4) und über einen Emitter-Widerstand R6 abgegriffen wird, der zwischen dem Emitter und Massepotential geschaltet ist. Der Ausgang ist mit dem Pin P4 eines FPGAs 11 verbunden, das als Eingang- und Ausgangsschaltung der Steuerung 10 fungiert. Die Lichtschranke LB1 ist offen, wenn der Lichtstrahl der LED nicht unterbrochen wird.

Die Lichtschranke ist geschlossen, wenn der Lichtstrahl der LED unterbrochen wird.

In der Fig. 4 ist eine Darstellung der zeitlichen Änderung des Pegelverlaufs für zwei unterschiedliche Gerätevarianten erfolgt. Das Eingangssignal VIN wechselt zum Zeitpunkt t1 seinen Pegel von Low (L-Pegel) auf High (H-Pegel). Bei der Gerätevariante A existiert nur eine geringe Verzögerung für das Ausgangssignal VOUTA der Sensorplatine 20, welches zum Zeitpunkt t2 erscheint. Im Unterschied dazu existiert bei der Gerätevariante B eine größere Verzögerung für das Ausgangssignal VOUTB der Sensorplatine 20, welches zum Zeitpunkt t4 erscheint.

Die Fig. 5 dient zur Erläuterung der Abfrage durch die Steuerung anhand eines Flußplanes 100. Nach dem Start 101 erfolgt im Schritt 102 eine Ausgabe des Signals VIN mit einem L/H-Pegelwechsel zum Zeitpunkt t1. Anschließend wird im Schritt 103 eine Zeitperiode Δt abgewartet, bevor der Pegel gemessen wird. Im Abfrageschritt 104 wird festgestellt, ob ein H-Pegel vorliegt, d.h. Logikpegel = 1.

Ist das nicht der Fall, dann liegt die Gerätevariante B vor und ein zugehöriges Anwenderprogramm wird geladen (Schritt 105). Anderenfalls liegt die Geräte-variante A vor und ein zugehöriges Anwenderprogramm wird geladen (Schritt 106).

Die Fig. 6 zeigt eine Prinzipschaltung einer Sensorplatine 20 mit zwei Lichtschranken gemäß der Erfindung. Ein Ausgang des FPGA's liegt am Pin P1 und liefert das Signal VIN. Das vorgenannte Signal gelang über einen ersten Negator N1 und einen Tiefpass TP an den Eingang eines zweiten Negators N2. Dessen Feldeffekttransistor T2 arbeitet als Impedanzwandler. Deshalb können zwei Lichtschranken, vorzugsweise vom Typ TCST1103, angeschlossen werden. Deren Ausgangssignal VOUT1 bzw. VOUT2 Gelangt an die Pins P3 bzw. P2 des FPGA's.

Die am Druckwagen angeformte Fahne, die je nach Position des Druckwagens den Strahlengang der Lichtschranke unterbricht oder nicht unterbricht, hat eine Geometrie, die niemals beide Lichtschranken gleichzeitig durchbrechen kann. Es stehen weder zusätzliche Signalleitungen zur Codierung zur Verfügung noch ist derartiges erforderlich. Nur die bestehenden Leitungen werden benötigt. Ausgehend von der Erkenntnis, dass mindestens eine der beiden Lichtschranken naturgemäß offen bleibt, unabhängig davon, wo der Druckkopfwagen steht, schaltet nun die Steuerung eine im FPGA arbeitende Ablaufsteuerung ein zur Variantenerkennung der LEDs ein und prüft, ob mit einer Zeitverzögerung am Ausgang mindestens einer der Lichtschranken H-Pegel, d.h. das Signal "offen" erscheint. Der Lichtstrahl kommt also am Fototransistor der Lichtschranke LB1 oder LB2 an und der Fototransistor gibt ein Signal V_{OUT1} oder das Signal V_{OUT2} ab.

Bei der Variante A erscheint sofort "offen" an mindestens einer Lichtschranke, d.h. Gerätevariante A mit einer "alten" Sensorplatine.

Bei der Variante B erscheint "offen" an mindestens einer Lichtschranke erst nach einer bestimmten Zeit Δt, d.h. "neue Platine". Dieses Verhalten wird durch ein Zeitverzögerungsglied (RC-Glied) auf der "neuen" Platine erreicht, welches über den Transistor den LED-Strom erst verzögert freischaltet.

Die geänderte Schaltung einer Sensorplatine trägt zur Bestimmung der Position des Druckwagens bei. Am Druckwagen ist eine Fahne angeformt, die den Lichtstrahl einer Lichtschranke unterbricht, wenn eine entsprechende Position beim Verfahren des Druckwagens erreicht wird. Der Vergleich von Signal-änderungen am Ausgang der Durchlichtschranke wird in einem separaten Komparator ausgeführt, der Mittels eines FPGA realisiert wird. Das FPGA ist ein Bestandteil der Steuerung und am Ausgang der Empfängereinheit angeschlossen.

Alternativ kann die Erkennung der Sensorplatine für die Gerätevarianten A bzw. B automatisch auch durch einen Mainboardprozessor der Steuerung über eine Software erfolgen.

Es ist vorgesehen, dass der Mainboardprozessor der Steuerung programmiert ist, um zu jeder Gerätevariante ein zugehöriges Anwenderprogramm zu laden.

## Patentansprüche

1. Druckergerät, welches zur Unterscheidung von Gerätevarianten eine Sensorplatine (20) mit mindestens einer Lichtschranke (LB1) und mit einem Tiefpass (TP) zur Verzögerung eines von einem Ausgang einer Steuerung (10) gelieferten Eingangssignals für die mindestens eine Lichtschranke (LB1) aufweist, wobei die Verzögerung auf die jeweilige Gerätevariante abgestimmt ist, wobei die Steuerung ein FPGA aufweist, welches eine Ablaufsteuerung realisiert, um das Auftreten oder Nichtauftreten einer Verzögerung des Ausgangssignals der Lichtschranke der Sensorplatine nach einer vorbestimmten Zeitdauer ab dem Liefern des Eingangssignals festzustellen.

2. Druckergerät, nach Anspruch 1, **gekennzeichnet**dadurch, dass die Erkennung der Sensorplatine für die Gerätevarianten A bzw. B automatisch durch ein FPGA oder durch einen Mainboardprozessor der Steuerung (10) über eine Software erfolgt.

3. Druckergerät, nach Anspruch 1, **gekennzeichnet dadurch, dass** ein Mainboardprozessor der Steuerung (10) programmiert ist, um zu jeder Gerätevariante ein zugehöriges Anwenderprogramm zu laden.

4. Druckergerät, nach Anspruch 1, **gekennzeichnet dadurch, dass** die Sensorplatine (20) einen zwischen zwei Negatoren (N1, N2) angeordneten Tiefpass (TP) und zwei Lichtschranken (LB1, LB2) aufweist.

## Claims

1. Printing apparatus which has a sensor circuit board (20) to differentiate apparatus variants, which sensor circuit board (20) has at least one photoelectric barrier (LB1), and with a low-pass (TP) to delay an input signal for the photoelectric barrier, which input signal is delivered from an output of a controller (10); wherein the delay is matched to the respective apparatus variant; wherein the controller has an FPGA which realizes a workflow control in order to establish the occurrence or non-occurrence of a delay of the output signal of the photoelectric barrier of the sensor circuit board after a predetermined duration as of the delivery of the input signal for said photoelectric barrier.

2. Printing apparatus according to Claim 1, **characterized in that** the detection by the sensor circuit board for the apparatus variants A or, respectively, B takes place automatically via an FPGA, or in software via a mainboard processor of the controller (10).

3. Printing apparatus according to Claim 1, **characterized in that** a mainboard processor of the controller (10) is programmed in order to load an associated user program for each apparatus variant.

4. Printing apparatus according to Claim 1, **characterized in that** the sensor circuit board (20) has a low-pass (TP) and two photoelectric barriers (LB1, LB2) arranged between two negators (N1, N2).

## Revendications

1. Périphérique d'impression, lequel pour la différentiation de variantes d'appareils comporte une carte imprimée de capteurs (20) dotée d'au moins une barrière photo-électrique (LB1) et d'un filtre passe-bas (TP) destiné à temporiser un signal d'entrée fourni par une sortie d'un système de commande (10) à l'attention de l'au moins une barrière photo-électrique (LB1), la temporisation étant adaptée à la variante respective d'appareil, le système de commande comportant un FPGA, lequel procède à une commande séquentielle, pour constater, après une période prédéfinie après la fourniture du signal une production ou une non production d'une temporisation du signal de sortie de la barrière photo-électrique de la carte imprimée de capteurs.

2. Périphérique d'impression selon la revendication 1, **caractérisé en ce que** l'identification de la carte imprimée de capteurs pour les variantes d'appareils A ou B s'effectue automatiquement par un FPGE ou par un processeur à carte-mère du système de commande (10), via un logiciel.

3. Périphérique d'impression selon la revendication 1, **caractérisé en ce qu'**un processeur à carte-mère du système de commande (10) est programmé pour charger pour chaque variante d'appareil un programme d'application correspondant.

4. Périphérique d'imprimante selon la revendication 1, **caractérisé en ce que** la carte imprimée de capteurs (20) comporte un filtre passe-bas (TP) placé entre deux inverseurs (N1, N2) et deux barrières photo-électriques (LB1, LB2).
